# DEMANDE DE BREVET EUROPEEN

(11) **EP 4 648 254 A1**
(43) Date de publication de la demande: **12.11.2025**
(21) Numéro de dépôt: 25168855.2
(22) Date de dépôt: 07.04.2025
(51) Int. Cl.: H02J 7/00

(54) **SURVEILLANCE DU COURANT DE RECHARGE ISSU D'UNE SOURCE D'ALIMENTATION EXTERNE ET RECHARGEANT UNE BATTERIE D'UN SYSTÈME**

(30) Priorité: 07.05.2024 FR 2404785
(71) Demandeur: Stellantis Auto SAS, 78300 Poissy (FR)
(72) Inventeur: BALENGHIEN, OLIVIER, 93390 CLICHY SOUS BOIS (FR); PEITL, AMELIE, 94800 VILLEJUIF (FR); SIMON, OLIVIER, 78700 CONFLANS SAINTE HONORINE (FR)
(74) Mandataire: PSIP

(57) **Abrégé**

Un procédé de surveillance est mis en œuvre dans un système comprenant une batterie rechargeable propre à recevoir un courant de recharge mesurable pendant une phase de recharge par une source d'alimentation externe. Ce procédé comprend une étape (10-60) dans laquelle on détermine pendant la phase de recharge si le courant de recharge mesuré est compris entre un courant de recharge maximal choisi et ce courant de recharge maximal choisi augmenté d'une première valeur choisie, et dans l'affirmative on autorise la poursuite de la phase de recharge et on réalise au moins une première action dans le système, tandis que si le courant de recharge mesuré est supérieur au courant de recharge maximal choisi augmenté de la première valeur choisie on interrompt la phase de recharge et on réalise au moins une deuxième action dans le système.

## Description

### Domaine technique de l'invention

L'invention concerne les systèmes comprenant une batterie rechargeable, et plus précisément la surveillance au sein de tels systèmes du courant de recharge qui est fourni pendant une phase de recharge par une source d'alimentation externe.

### Etat de la technique

Certains systèmes, comme par exemple certains véhicules (éventuellement de type automobile), comprennent une batterie pouvant être rechargée par une source d'alimentation externe pendant une phase de recharge.

Généralement, lorsque le système est un véhicule, la batterie rechargeable est notamment chargée d'alimenter au moins une machine motrice électrique du groupe motopropulseur (ou GMP), et donc constitue une batterie principale (ou « de puissance » ou encore « de traction »).

On notera que l'invention concerne aussi bien les recharges en en courant continu (par exemple en mode 4) que les recharges en courant alternatif (par exemple en mode 2 ou 3).

Il est rappelé que la recharge en mode 4 d'une batterie rechargeable se fait par couplage du connecteur de recharge du système à une borne ou station de recharge via un câble de recharge comportant un connecteur d'alimentation électrique, avec un courant qui est généralement compris entre 125 A et 250 A, sous une tension continue par exemple de 450 V ou 600 V. De plus, dans une recharge en mode 4 la batterie rechargeable est alimentée en courant continu issu directement de la borne ou station de recharge et donc sans conversion par un convertisseur DC/DC (« Direct Current / Direct Current ») du système.

Il est également rappelé que la recharge en mode 2 d'une batterie rechargeable se fait par couplage du connecteur de recharge du système à une prise électrique murale classique via un câble de recharge comportant un connecteur d'alimentation électrique, avec un courant qui est généralement compris entre 8 A et 13 A, sous une tension alternative de 220 V. Par ailleurs, la recharge en mode 3 d'une batterie rechargeable se fait par couplage du connecteur de recharge du système à un boîtier mural spécifique (ou « wallbox ») via un câble de recharge comportant un connecteur d'alimentation électrique, avec un courant généralement compris entre 16 A et 32 A, sous une tension alternative de 220 V, en monophasé ou triphasé. De plus, dans une recharge en mode 2 ou 3 c'est le convertisseur du système qui alimente la batterie rechargeable en courant continu, après conversion AC/DC (« Alternativ Current / Direct Current » - par exemple de 220 V vers 450 V).

Il a été proposé de surveiller les recharges en surveillant la tension mesurée venant soit de la borne de recharge lors d'une phase de recharge en mode 4 (comme décrit notamment dans le document brevet FR-A1 3 126 664), soit du convertisseur lors d'une phase de recharge en mode 2 ou 3 (comme décrit notamment dans le document brevet FR-A1 3 126 665). Dans les deux cas, on compare la tension mesurée à un seuil de tension afin de déterminer si elle est normale ou anormale (supérieure au seuil de tension).

Cependant, ce type de surveillance ne permet pas de protéger suffisamment la batterie rechargeable lors de ses phases de recharge. Par exemple, une défaillance du convertisseur peut aboutir à la délivrance d'un sur-courant de recharge sur sa sortie qui ne peut pas être détecté via la tension. Or, comme le sait l'homme de l'art, une insuffisance de protection est de nature à réduire la durée de vie de certains composants (ou équipements) électriques d'un ensemble (ou « pack) de batterie, et en particulier des cellules électrochimiques de stockage d'énergie électrique de la batterie (par exemple de type lithium-ion (ou Li-ion) ou Ni-Mh ou Ni-Cd), ou à provoquer lorsqu'elle dure relativement longtemps des dégradations de ces composants (ou équipements) électriques qui peuvent être à l'origine d'un incendie dans le système et/ou d'une électrocution de passager(s).

### L'invention a donc notamment pour but d'améliorer la situation.

### Présentation de l'invention

Elle propose notamment à cet effet un procédé de surveillance destiné à être mis en œuvre dans un système comprenant une batterie rechargeable propre à recevoir un courant de recharge mesurable pendant une phase de recharge par une source d'alimentation externe.

Ce procédé de surveillance se caractérise par le fait qu'il comprend une étape dans laquelle on détermine pendant la phase de recharge si le courant de recharge mesuré est compris entre un courant de recharge maximal choisi et le courant de recharge maximal choisi augmenté d'une première valeur choisie, et dans l'affirmative on autorise la poursuite de cette phase de recharge et on réalise au moins une première action dans le système, tandis que si le courant de recharge mesuré est supérieur au courant de recharge maximal choisi augmenté de la première valeur choisie on interrompt la phase de recharge et on réalise au moins une deuxième action dans le système.

Grâce à l'invention, la batterie rechargeable est désormais parfaitement protégée lors de ses phases de recharge externe, car il n'y a plus de risque d'endommagement ou de réduction de la durée de vie de certains composants (ou équipements) électriques de l'ensemble de batterie dont elle fait partie.

Le procédé de surveillance selon l'invention peut comporter d'autres caractéristiques qui peuvent être prises séparément ou en combinaison, et notamment :
- dans son étape, on peut réaliser chaque première action lorsque le courant de recharge mesuré est compris entre le courant de recharge maximal choisi et le courant de recharge maximal choisi augmenté de la première valeur choisie pendant une durée qui est supérieure à une première durée choisie ;
- dans son étape, chaque première action peut être choisie parmi une génération d'une alerte d'un usager du système requérant un contrôle par un service après-vente et un enregistrement d'au moins un premier code défaut représentatif d'un premier problème de sur-courant de recharge pendant la phase de recharge ;
- dans son étape, le courant de recharge maximal peut être choisi en fonction d'une température en cours dans la batterie rechargeable et/ou d'un état de charge en cours de la batterie rechargeable ;
- dans son étape, la première valeur choisie peut être comprise entre 3% et 7% du courant de recharge maximal choisi ;
- dans son étape, on peut aussi déterminer pendant la phase de recharge si le courant de recharge mesuré est supérieur au courant de recharge maximal choisi augmenté d'une seconde valeur choisie strictement supérieure à la première valeur choisie, et si le courant de recharge mesuré est compris entre le courant de recharge maximal choisi augmenté de la première valeur choisie et le courant de recharge maximal choisi augmenté de la seconde valeur choisie pendant une durée supérieure à une deuxième durée choisie on peut interrompre la phase de recharge et on peut réaliser chaque deuxième action, tandis que si le courant de recharge mesuré est supérieur au courant de recharge maximal choisi augmenté de la seconde valeur choisie pendant une durée supérieure à une troisième durée choisie on peut interrompre la phase de recharge et on peut réaliser au moins une troisième action dans le système ;
- en présence de la dernière option, dans son étape, chaque deuxième action peut être choisie parmi une génération d'une alerte d'un usager du système requérant un contrôle par un service après-vente et un enregistrement d'au moins un deuxième code défaut représentatif d'un deuxième problème de sur-courant de recharge pendant la phase de recharge, et chaque troisième action peut être choisie parmi une génération d'une alerte d'un usager du véhicule requérant un contrôle par un service après-vente et un enregistrement d'au moins un troisième code défaut représentatif d'un troisième problème de sur-courant de recharge pendant la phase de recharge ;
- également en présence de la dernière option, dans son étape, la seconde valeur choisie peut être comprise entre 8% et 17% du courant de recharge maximal choisi.

L'invention propose également un produit programme d'ordinateur comprenant un jeu d'instructions qui, lorsqu'il est exécuté par des moyens de traitement, est propre à mettre en œuvre un procédé de surveillance du type de celui présenté ci-avant, dans un système comprenant une batterie rechargeable propre à recevoir un courant de recharge mesurable pendant une phase de recharge par une source d'alimentation externe, pour surveiller chaque phase de recharge.

L'invention propose également un dispositif de surveillance destiné à équiper un système comprenant une batterie rechargeable propre à recevoir un courant de recharge mesurable pendant une phase de recharge par une source d'alimentation externe.

Ce dispositif de surveillance se caractérise par le fait qu'il comprend au moins un processeur et au moins une mémoire agencés pour effectuer les opérations consistant à déterminer pendant la phase de recharge si le courant de recharge mesuré est compris entre un courant de recharge maximal choisi et le courant de recharge maximal choisi augmenté d'une première valeur choisie, et dans l'affirmative à autoriser la poursuite de la phase de recharge et à déclencher une réalisation d'au moins une première action dans le système, et, si le courant de recharge mesuré est supérieur au courant de recharge maximal choisi augmenté de la première valeur choisie, à déclencher une interruption de la phase de recharge et une réalisation d'au moins une deuxième action dans le système.

L'invention propose également un système comprenant, d'une part, une batterie rechargeable propre à recevoir un courant de recharge mesurable pendant une phase de recharge par une source d'alimentation externe, et, d'autre part, un dispositif de surveillance du type de celui présenté ci-avant.

Par exemple, ce système peut être un véhicule, éventuellement de type automobile.

### Brève description des figures

D'autres caractéristiques et avantages de l'invention apparaîtront à l'examen de la description détaillée ci-après, et des dessins annexés, sur lesquels :
[Fig. 1] illustre schématiquement et fonctionnellement un exemple de réalisation d'un véhicule comprenant une chaîne de transmission à GMP à machine motrice électrique associée à une batterie principale rechargeable et associée à un calculateur de batterie, et un dispositif de surveillance selon l'invention,
[Fig. 2] illustre schématiquement et fonctionnellement un exemple de réalisation d'un calculateur de batterie comprenant un exemple de réalisation d'un dispositif de surveillance selon l'invention, et
[Fig. 3] illustre schématiquement un exemple d'algorithme mettant en œuvre un procédé de surveillance selon l'invention.

### Description détaillée de l'invention

L'invention a notamment pour but de proposer un procédé de surveillance, et un dispositif de surveillance DS associé, destinés à permettre une surveillance du courant de recharge crb qui est fourni à la batterie rechargeable BP d'un système S pendant sa recharge par une source d'alimentation SA externe.

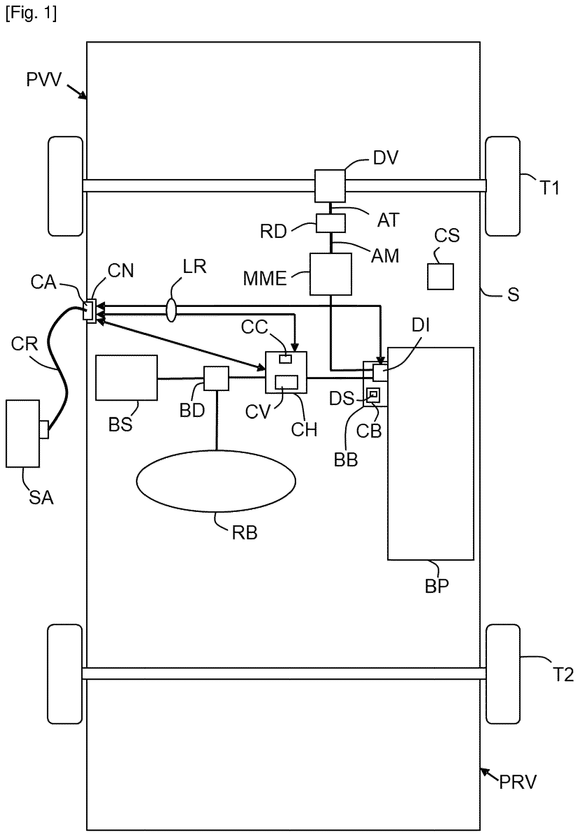

Dans ce qui suit, on considère, à titre d'exemple non limitatif, que le système S est un véhicule de type automobile, comme par exemple une voiture comme illustré sur la figure 1. Mais l'invention n'est pas limitée à ce type de système. Elle concerne en effet tout type de système comprenant au moins une batterie rechargeable via un connecteur de recharge pouvant être couplé à une source d'alimentation externe. Ainsi, elle concerne tous les véhicules (terrestres, maritimes (ou fluviaux), ou aériens), les appareils électroniques (éventuellement électroménagers), les installations électrifiées (éventuellement industrielles), les grues ou robots, et les bâtiments électrifiés.

Par ailleurs, on considère dans ce qui suit, à titre d'exemple non limitatif, que le véhicule S comprend une chaîne de transmission à groupe motopropulseur (ou GMP) de type tout électrique (et donc dont la motricité est assurée exclusivement par au moins une machine motrice électrique MME). Mais le GMP pourrait être de type hybride (thermique et électrique).

On a schématiquement représenté sur la figure 1 un système S (ici un véhicule) comprenant une chaîne de transmission à GMP électrique (et donc à machine motrice électrique MME), un calculateur de supervision CS, un réseau de bord RB, une batterie de servitude BS, une batterie rechargeable BP associée à un calculateur de batterie CB, un circuit électrique principal connecté à un connecteur de recharge CN, un chargeur CH, un convertisseur CV, et un dispositif de surveillance DS selon l'invention.

Le réseau de bord RB est un réseau d'alimentation électrique auquel sont couplés des équipements (ou organes) électriques (ou électroniques) qui consomment de l'énergie électrique.

La batterie de servitude BS est chargée de fournir de l'énergie électrique au réseau de bord RB, en complément de celle fournie par le convertisseur CV alimenté par la batterie rechargeable BP via le circuit électrique principal CEP, et parfois à la place de ce convertisseur CV. Par exemple, cette batterie de servitude BS peut être agencée sous la forme d'une batterie de type très basse tension (typiquement 12 V, 24 V ou 48 V). Elle est rechargeable au moins par le convertisseur CV. On considère dans ce qui suit, à titre d'exemple non limitatif, que la batterie de servitude BS est de type Lithium-ion 12 V.

Le circuit électrique principal (ou « haute tension ») est connecté, d'une part, à la batterie rechargeable BP, par exemple via un dispositif d'interface DI, et, d'autre part, à des équipements électroniques, comme par exemple le convertisseur CV et la machine motrice électrique MME. Il permet aussi la recharge de la batterie rechargeable BP par une source d'alimentation SA externe et temporairement couplée au connecteur de recharge CN du véhicule S. Ce circuit électrique principal comprend donc au moins un circuit d'alimentation assurant le couplage entre la batterie rechargeable BP et au moins les machine motrice électrique MME et convertisseur CV, et un circuit de recharge LR connecté au connecteur de recharge CN et permettant de recharger la batterie rechargeable BP via une source d'alimentation SA externe et temporairement couplée au connecteur de recharge CN via un câble de recharge CR.

Dans l'exemple illustré non limitativement sur la figure 1 le circuit de recharge LR permet de recharger la batterie rechargeable BP non seulement en courant continu (par exemple en mode 4), mais aussi en courant alternatif (par exemple en mode 2 ou 3), sous le contrôle d'un calculateur de chargeur CC (contrôlant le (et faisant partie du) chargeur CH) et du calculateur de batterie CB (associé à la batterie rechargeable BP). Mais dans des variantes de réalisation non illustrées, le circuit de recharge LR pourrait ne permettre que les recharges en courant continu ou que les recharges en courant alternatif.

La chaîne de transmission a un GMP qui est, ici, purement électrique et donc qui comprend, notamment, une machine motrice électrique MME, un arbre moteur AM, et un arbre de transmission AT. On entend ici par « machine motrice électrique » une machine électrique agencée de manière à fournir du couple pour déplacer le véhicule S lorsqu'elle est alimentée en énergie électrique, ainsi qu'éventuellement à récupérer du couple dans la chaîne de transmission.

Le fonctionnement de la chaîne de transmission (et donc du GMP) est supervisé par un calculateur de supervision CS.

La machine motrice électrique MME (ici un moteur électrique) est ici couplée à la batterie rechargeable BP via le circuit d'alimentation du circuit électrique principal, afin d'être alimentée en énergie électrique, ainsi qu'éventuellement d'alimenter cette batterie rechargeable BP en énergie électrique, par exemple lors d'une phase de freinage récupératif.

Par ailleurs, cette machine motrice électrique MME est couplée à l'arbre moteur AM, pour lui fournir du couple par entraînement en rotation. Cet arbre moteur AM est ici couplé à un réducteur RD qui est aussi couplé à l'arbre de transmission AT, lui-même couplé à un premier train T1 (ici de roues), de préférence via un différentiel DV.

Ce premier train T1 est ici situé dans la partie avant PVV du véhicule S. Mais dans une variante ce premier train T1 pourrait être celui qui est ici référencé T2 et qui est situé dans la partie arrière PRV du véhicule S.

Le convertisseur CV est aussi chargé, ici, pendant les phases de roulage du véhicule S de convertir une partie du courant électrique stocké dans la batterie rechargeable BP pour alimenter en courant électrique converti le réseau de bord RB et la batterie de servitude BS (pour la recharger).

Le convertisseur CV est aussi chargé pendant des phases de recharge en mode 2 ou 3 de la batterie rechargeable BP de convertir en courant continu le courant alternatif fourni sous une tension alternative par la source d'alimentation SA externe. Il est rappelé que pendant les phases de recharge en mode 4 de la batterie rechargeable BP le courant fourni par la source d'alimentation SA externe est déjà continu et donc n'a pas besoin d'être converti par le convertisseur CV. De ce fait en mode 4, le courant reçu par le connecteur de recharge CN alimente directement la batterie rechargeable BP via la sous-partie concernée du circuit de recharge LR du circuit électrique principal et via le dispositif d'interface DI.

On notera, comme illustré non limitativement sur la figure 1, que le convertisseur CV peut faire partie du chargeur CH qui comprend aussi le calculateur de chargeur CC chargé, au moins, de contrôler les recharges de la batterie rechargeable BP, comme on le verra plus loin.

La batterie rechargeable BP alimentant ici la machine motrice électrique MME, elle constitue une batterie principale (ou de traction ou encore de puissance). Elle peut, par exemple, comprendre des cellules de stockage d'énergie électrique, éventuellement électrochimiques (par exemple de type lithium-ion (ou Li-ion) ou Ni-Mh ou Ni-Cd). Egalement par exemple, la batterie rechargeable BP peut être de type basse tension (typiquement 450 V à titre illustratif). Mais elle pourrait être de type moyenne tension ou haute tension.

Par ailleurs, la batterie rechargeable BP est (ici) associée à un boîtier de batterie BB qui comprend notamment le dispositif d'interface (ou d'isolement) DI, des moyens de mesure de tension/courant (non illustrés), et le calculateur de batterie CB. Par exemple, la batterie rechargeable BP et le boîtier de batterie BB peuvent faire partie d'un ensemble (ou « pack ») de batterie.

Au début d'une phase de recharge, et donc après le couplage temporaire d'une source d'alimentation SA externe au connecteur de recharge CN, le calculateur de batterie CB (ou le dispositif de surveillance DS) peut déterminer le courant de recharge maximal crm que la batterie rechargeable BP est en capacité de recevoir sans risque d'endommagement. Puis, le calculateur de batterie CB transmet ce courant de recharge maximal déterminé crm à un calculateur du véhicule S, par exemple le calculateur de chargeur CC qui gère les échanges d'informations avec la source d'alimentation SA pendant une phase de recharge.

De plus, au début d'une phase de recharge, et donc après le couplage temporaire d'une source d'alimentation SA externe au connecteur de recharge CN, le calculateur de batterie CB détermine aussi l'état de charge (ou SOC (« State Of Charge »)) en cours ecc de la batterie rechargeable BP.

Par ailleurs, pendant toute la phase de recharge, le calculateur de batterie CB est informé, par exemple périodiquement, de la valeur mesurée du courant de recharge crb que reçoit la batterie rechargeable BP soit directement de la source d'alimentation SA, soit du convertisseur CV (alimenté en courant alternatif par la source d'alimentation SA).

On notera également que dans l'exemple illustré non limitativement sur la figure 1 le véhicule S comprend aussi un boîtier de distribution BD auquel sont couplés la batterie de servitude BS, le convertisseur CV et le réseau de bord RB. Ce boîtier de distribution BD est chargé de distribuer dans le réseau de bord RB l'énergie électrique stockée dans la batterie de servitude BS ou produite par le convertisseur CV, pour l'alimentation des organes (ou équipements) électriques couplés au réseau de bord RB en fonction de demandes d'alimentation reçues (notamment du calculateur de supervision CS du GMP).

Le dispositif d'interface DI est agencé de manière à isoler en cas de besoin la batterie rechargeable BP de l'intégralité du circuit électrique principal, ainsi qu'individuellement du connecteur de recharge CN, de la machine motrice électrique MME, et du convertisseur CV. Il comprend des contacteurs (ou interrupteurs), éventuellement à base de MOSFET(s), qui peuvent être placés chacun dans un état ouvert (ou non passant) ou un état fermé (ou passant) sur ordre du calculateur de batterie CB, ainsi que des fusibles de protection.

Comme évoqué plus haut, l'invention propose notamment un procédé de surveillance destiné à permettre la surveillance du courant de recharge crb fourni à la batterie rechargeable BP (et mesuré) pendant sa recharge par une source d'alimentation SA externe.

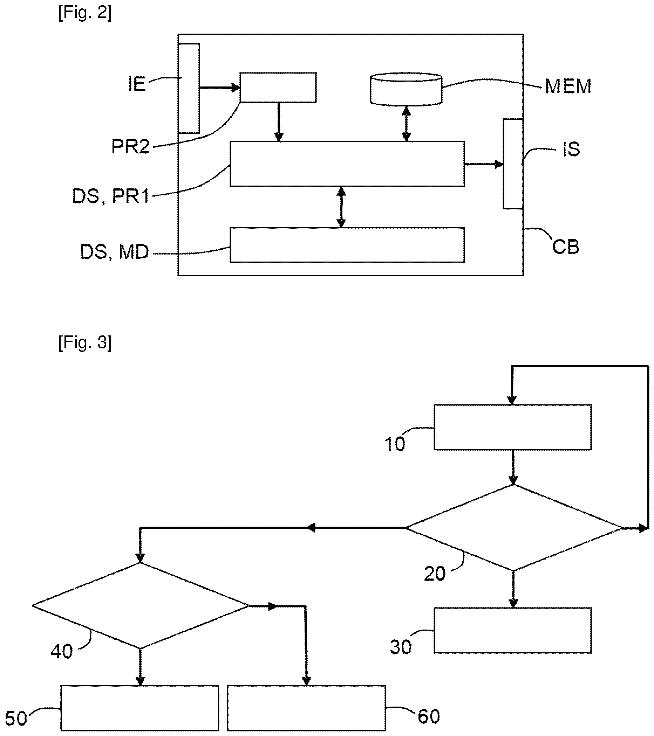

Ce procédé (de surveillance) peut être mis en œuvre au moins partiellement par le dispositif de surveillance DS (illustré au moins partiellement sur les figures 1 et 2) qui comprend à cet effet au moins un processeur PR1, par exemple de signal numérique (ou DSP (« Digital Signal Processor »)), et au moins une mémoire MD. Ce dispositif de surveillance DS peut donc être réalisé sous la forme d'une combinaison de circuits ou composants électriques ou électroniques (ou « hardware ») et de modules logiciels (ou « software »). A titre d'exemple, il peut s'agir d'un microcontrôleur.

La mémoire MD est vive afin de stocker des instructions pour la mise en œuvre par le processeur PR1 d'une partie au moins du procédé de surveillance. Le processeur PR1 peut comprendre des circuits intégrés (ou imprimés), ou bien plusieurs circuits intégrés (ou imprimés) reliés par des connexions filaires ou non filaires. On entend par circuit intégré (ou imprimé) tout type de dispositif apte à effectuer au moins une opération électrique ou électronique.

Dans l'exemple illustré non limitativement sur les figures 1 et 2, le dispositif de surveillance DS fait partie du calculateur de batterie CB. Mais cela n'est pas obligatoire. En effet, le dispositif de surveillance DS pourrait comprendre son propre calculateur dédié, lequel est alors couplé au calculateur de batterie CB, ou bien pourrait faire partie d'un autre calculateur du système S, comme par exemple le calculateur de chargeur CC.

Comme illustré non limitativement sur la figure 3, le procédé (de surveillance), selon l'invention, comprend une étape 10-60 qui est mise en œuvre chaque fois que débute une phase de recharge de la batterie rechargeable BP par couplage temporaire à une source d'alimentation SA externe.

L'étape 10-60 du procédé comprend une sous-étape 20 dans laquelle on (par exemple le dispositif de surveillance DS) détermine pendant la phase de recharge si le courant de recharge mesuré crb (et donc effectivement reçu par la batterie rechargeable BP) est compris entre le courant de recharge maximal crm choisi et le courant de recharge maximal crm choisi augmenté d'une première valeur v1 choisie, soit si crm < crb ≤ crm + v1.

Si l'on a crm < crb ≤ crm + v1 (et donc dans l'affirmative), l'étape 10-60 du procédé comprend une sous-étape 30 dans laquelle on (par exemple le dispositif de surveillance DS) autorise la poursuite de la phase de recharge, et on réalise au moins (par exemple le dispositif de surveillance DS déclenche la réalisation d'au moins) une première action dans le système S (ici un véhicule). On considère en effet que le dépassement du courant de recharge maximal crm n'est pas suffisamment important pour endommager ou réduire la durée de vie de certains composants (ou équipements) électriques de l'ensemble de batterie BB et BP, et donc qu'il n'y a pas lieu d'interrompre la recharge en cours.

Si le courant de recharge mesuré crb est supérieur au courant de recharge maximal crm choisi augmenté de la première valeur v1 choisie (soit si crb > crm + v1), l'étape 10-60 du procédé comprend une sous-étape 50 dans laquelle on interrompt (par exemple le dispositif de surveillance DS déclenche l'interruption de) la phase de recharge, et on réalise au moins (par exemple le dispositif de surveillance DS déclenche la réalisation d'au moins) une deuxième action dans le système S (ici un véhicule). On considère en effet que le dépassement du courant de recharge maximal crm risque d'endommager ou de réduire la durée de vie de certains composants (ou équipements) électriques de l'ensemble de batterie BB et BP, et donc qu'il faut immédiatement interrompre la recharge en cours.

On notera que si le courant de recharge mesuré crb est inférieur ou égal au courant de recharge maximal crm (soit si crb ≤ crm), on retourne effectuer une éventuelle sous-étape 10 ou la sous-étape 20 avec le courant de recharge mesuré crb suivant, car la recharge se déroule normalement.

Ainsi, la batterie rechargeable BP est parfaitement protégée lors de ses phases de recharge externe, y compris en cas de défaillance du convertisseur CV, car il n'y a plus de risque d'endommagement ou de réduction de la durée de vie de certains composants (ou équipements) électriques de l'ensemble de batterie BB et BP.

Par exemple, dans la sous-étape 30 on peut réaliser (par exemple le dispositif de surveillance DS peut déclencher la réalisation de) chaque première action lorsque le courant de recharge mesuré crb est compris entre le courant de recharge maximal crm choisi et le courant de recharge maximal crm choisi augmenté de la première valeur v1 choisie pendant une durée do qui est supérieure à une première durée d1 choisie (soit si crm < crb ≤ crm + v1 pendant do > d1).

Cette option est destinée à éviter de prendre en compte une unique mesure ou quelques mesures successives du courant de recharge crb qui serai(en)t temporairement anormale(s), car ne correspondant pas à la situation réelle en cours, par exemple du fait d'un dysfonctionnement très temporaire du capteur concerné ou de l'absence de réception très temporaire du courant de recharge mesuré crb.

Par exemple, la première durée choisie d1 peut être comprise entre 5 s et 15 s. A titre d'exemple illustratif cette première durée choisie d1 peut être égale à 10 s. Mais d'autres valeurs de première durée choisie d1 peuvent être utilisées. Par exemple, cette première durée d1 peut être choisie pendant la phase de mise au point d'un véhicule similaire au véhicule S.

Egalement par exemple, dans la sous-étape 30 chaque première action peut être choisie parmi la génération d'une alerte d'un usager du système S (ici un véhicule) requérant un contrôle par (ou dans) un service après-vente et l'enregistrement d'au moins un premier code défaut représentatif d'un premier problème de sur-courant de recharge pendant la phase de recharge. La première première action est destinée à avertir le conducteur d'un problème rencontré lors de la recharge et pouvant résulter du convertisseur CV, et donc requérant une vérification. La seconde première action est destinée à faciliter la recherche de l'origine du premier problème de sur-courant de recharge par le service après-vente chargé du contrôle du système S, et l'éventuelle réparation.

L'alerte de l'usager (par exemple le conducteur) peut se faire, par exemple, au moyen d'un voyant allumé (par exemple dans le tableau de bord du véhicule S) et/ou d'un message affiché sur au moins un écran du véhicule S (par exemple du tableau de bord ou d'un combiné central) ou sur l'écran d'un téléphone intelligent (ou « smartphone ») de l'usager, et/ou diffusé par au moins un haut-parleur du véhicule S ou de ce téléphone intelligent. Le voyant précité peut, par exemple, être un voyant de service, mais il pourrait aussi s'agir d'un voyant dédié à la recharge.

On notera également que le stockage du (de chaque) premier code défaut peut, par exemple, se faire dans une mémoire (éventuellement morte) du dispositif de surveillance DS ou du calculateur de batterie CB ou encore du calculateur de supervision CS.

On notera que l'on réalise de préférence les deux premières actions.

Egalement par exemple, et comme illustré non limitativement sur la figure 3, l'étape 10-60 peut comprendre une sous-étape 10 dans laquelle on (par exemple le dispositif de surveillance DS) peut choisir (ou déterminer) le courant de recharge maximal crm. Dans ce cas, dans la sous-étape 10 le courant de recharge maximal crm peut, par exemple, être choisi en fonction de la température en cours tb dans la batterie rechargeable BP et/ou de l'état de charge en cours ecc de la batterie rechargeable BP (calculé par le calculateur de batterie CB).

A cet effet, on (par exemple le dispositif de surveillance DS) peut utiliser une table de correspondance établissant une correspondance entre des courant de recharge maximaux et des paires de température de batterie et état de charge ou des températures de batterie ou états de charge. En variante, on (par exemple le dispositif de surveillance DS) peut calculer le courant de recharge maximal crm au moyen d'au moins une équation mathématique ayant comme paramètre(s) la température en cours tb et/ou l'état de charge en cours ecc.

Egalement par exemple, dans la sous-étape 20 la première valeur choisie v1 peut être comprise entre 3% et 7% du courant de recharge maximal crm choisi. A titre d'exemple illustratif cette première valeur choisie v1 peut être égale à 5% du courant de recharge maximal crm choisi. Mais d'autres valeurs de première valeur choisie v1 peuvent être utilisées. Par exemple, cette première valeur choisie v1 peut être choisie pendant la phase de mise au point d'un véhicule similaire au véhicule S.

Egalement par exemple, et comme illustré non limitativement sur la figure 3, lorsque l'on a crm < crb dans la sous-étape 20, l'étape 10-60 peut aussi comprendre une sous-étape 40 dans laquelle on (par exemple le dispositif de surveillance DS) peut aussi déterminer pendant la phase de recharge si le courant de recharge mesuré crb (et donc effectivement reçu par la batterie rechargeable BP) est supérieur au courant de recharge maximal choisi crm augmenté d'une seconde valeur v2 choisie, strictement supérieure à la première valeur v1 choisie, soit si crb > crm + v2 avec v2 > v1.

Si le courant de recharge mesuré crb est compris entre le courant de recharge maximal choisi crm augmenté de la première valeur choisie v1 et le courant de recharge maximal choisi augmenté de la seconde valeur choisie v2 pendant une durée do qui est supérieure à une deuxième durée d2 choisie, soit si l'on a crm + v1 < crb ≤ crm + v2 pendant do > d2, on effectue la sous-étape 50 pour interrompre la phase de recharge et réaliser chaque deuxième action.

Si le courant de recharge mesuré crb est supérieur au courant de recharge maximal crm choisi augmenté de la seconde valeur choisie v2 pendant une durée do qui est supérieure à une troisième durée d3 choisie (soit si crb > crm + v2 pendant do > d3), l'étape 10-60 du procédé peut comprendre, comme illustré non limitativement sur la figure 3, une sous-étape 60 dans laquelle on peut interrompre (par exemple le dispositif de surveillance DS peut déclencher l'interruption de) la phase de recharge, et on peut réaliser au moins (par exemple le dispositif de surveillance DS peut déclencher la réalisation d'au moins) une troisième action dans le système S (ici un véhicule). De préférence, la troisième durée choisie d3 est strictement inférieure à la deuxième durée choisie d2, car le dépassement du courant de recharge maximal crm est plus important et donc doit cesser plus rapidement.

Par exemple, dans la sous étape 50 chaque deuxième action peut être choisie parmi la génération d'une alerte d'un usager du système S (ici un véhicule) requérant un contrôle par (ou dans) un service après-vente et l'enregistrement d'au moins un deuxième code défaut représentatif d'un deuxième problème de sur-courant de recharge pendant la phase de recharge. La première deuxième action est destinée à avertir le conducteur d'un problème rencontré lors de la recharge et pouvant résulter du convertisseur CV, et donc requérant une vérification. La seconde deuxième action est destinée à faciliter la recherche de l'origine du deuxième problème de sur-courant de recharge par le service après-vente chargé du contrôle du système S, et l'éventuelle réparation.

L'alerte de l'usager (par exemple le conducteur) peut se faire, par exemple, au moyen d'un voyant allumé (par exemple dans le tableau de bord du véhicule S) et/ou d'un message affiché sur au moins un écran du véhicule S (par exemple du tableau de bord ou d'un combiné central) ou sur l'écran du téléphone intelligent de l'usager, et/ou diffusé par au moins un haut-parleur du véhicule S ou de ce téléphone intelligent. Le voyant précité peut, par exemple, être un voyant de service, mais il pourrait aussi s'agir d'un voyant dédié à la recharge.

On notera également que le stockage du (de chaque) deuxième code défaut peut, par exemple, se faire dans une mémoire (éventuellement morte) du dispositif de surveillance DS ou du calculateur de batterie CB ou encore du calculateur de supervision CS.

Egalement par exemple, la deuxième durée choisie d2 peut être comprise entre 5 s et 15 s. A titre d'exemple illustratif cette deuxième durée choisie d2 peut être égale à 10 s. Mais d'autres valeurs de deuxième durée choisie d2 peuvent être utilisées. Par exemple, cette deuxième durée d2 peut être choisie pendant la phase de mise au point d'un véhicule similaire au véhicule S.

Egalement par exemple, dans la sous étape 60 chaque troisième action peut être choisie parmi la génération d'une alerte d'un usager du système S (ici un véhicule) requérant un contrôle par (ou dans) un service après-vente et l'enregistrement d'au moins un troisième code défaut représentatif d'un troisième problème de sur-courant de recharge pendant la phase de recharge. La première troisième action est destinée à avertir le conducteur d'un problème rencontré lors de la recharge et pouvant résulter du convertisseur CV, et donc requérant une vérification. La seconde troisième action est destinée à faciliter la recherche de l'origine du troisième problème de sur-courant de recharge par le service après-vente chargé du contrôle du système S, et l'éventuelle réparation.

L'alerte de l'usager (par exemple le conducteur) peut se faire, par exemple, au moyen d'un voyant allumé (par exemple dans le tableau de bord du véhicule S) et/ou d'un message affiché sur au moins un écran du véhicule S (par exemple du tableau de bord ou d'un combiné central) ou sur l'écran du téléphone intelligent de l'usager, et/ou diffusé par au moins un haut-parleur du véhicule S ou de ce téléphone intelligent. Le voyant précité peut, par exemple, être un voyant de service, mais il pourrait aussi s'agir d'un voyant dédié à la recharge.

On notera également que le stockage du (de chaque) troisième code défaut peut, par exemple, se faire dans une mémoire (éventuellement morte) du dispositif de surveillance DS ou du calculateur de batterie CB ou encore du calculateur de supervision CS.

Egalement par exemple, la troisième durée choisie d3 peut être comprise entre 1 s et 5 s. A titre d'exemple illustratif cette troisième durée choisie d3 peut être égale à 3 s. Mais d'autres valeurs de troisième durée choisie d3 peuvent être utilisées. Par exemple, cette troisième durée d3 peut être choisie pendant la phase de mise au point d'un véhicule similaire au véhicule S.

Egalement par exemple, dans la sous étape 40 la seconde valeur choisie v2 peut être comprise entre 8% et 17% du courant de recharge maximal choisi crm. A titre d'exemple illustratif cette seconde valeur choisie v2 peut être égale à 10% du courant de recharge maximal crm choisi. Mais d'autres valeurs de seconde valeur choisie v2 peuvent être utilisées. Par exemple, cette seconde valeur choisie v2 peut être choisie pendant la phase de mise au point d'un véhicule similaire au véhicule S.

On notera également que de préférence, en cas d'interruption de la recharge, si l'usager déconnecte puis reconnecte le câble de recharge CR au connecteur de recharge CN, la phase de recharge peut reprendre et le procédé de surveillance recommencera.

On notera également que de préférence lorsqu'une alerte est déclenchée dans la sous-étape 30, lorsque le système S est remis en fonctionnement après un arrêt, l'alerte n'est plus déclenchée.

On notera également, comme illustré non limitativement sur la figure 2, que le calculateur de batterie CB (ou le calculateur du dispositif de surveillance DS) peut aussi comprendre une mémoire de masse MEM, notamment pour stocker chaque courant de recharge crb mesuré, chaque éventuel état de charge en cours ecc de la batterie rechargeable BP, et chaque éventuelle température tb de la batterie rechargeable BP, ainsi que d'éventuelles données intermédiaires intervenant dans tous ses calculs et traitements. Par ailleurs, ce calculateur de batterie CB (ou le calculateur du dispositif de surveillance DS) peut aussi comprendre une interface d'entrée IE pour la réception d'au moins chaque courant de recharge crb mesuré, chaque éventuel état de charge en cours ecc de la batterie rechargeable BP, et chaque éventuelle température tb de la batterie rechargeable BP, pour les utiliser dans des calculs ou traitements, éventuellement après les avoir mis en forme et/ou démodulés et/ou amplifiés, de façon connue en soi, au moyen d'un processeur de signal numérique PR2. De plus, ce calculateur de batterie CB (ou le calculateur du dispositif de surveillance DS) peut aussi comprendre une interface de sortie IS, notamment pour délivrer un message (ou ordre) d'interruption de la recharge en cours, et un message (ou ordre) de déclenchement d'au moins une action.

On notera également que l'invention propose aussi un produit programme d'ordinateur (ou programme informatique) comprenant un jeu d'instructions qui, lorsqu'il est exécuté par des moyens de traitement de type circuits électroniques (ou hardware), comme par exemple le processeur PR1, est propre à mettre en œuvre le procédé de surveillance décrit ci-avant pour surveiller dans le système S chaque phase de recharge de la batterie rechargeable BP par couplage temporaire à une source d'alimentation SA externe.

## Revendications

1. Procédé de surveillance pour un système (S) comprenant une batterie rechargeable (BP) propre à recevoir un courant de recharge mesurable pendant une phase de recharge par une source d'alimentation (SA) externe, **caractérisé en ce qu'**il comprend une étape (10-60) dans laquelle on détermine pendant ladite phase de recharge si ledit courant de recharge mesuré est compris entre un courant de recharge maximal choisi et ledit courant de recharge maximal choisi augmenté d'une première valeur choisie, et dans l'affirmative on autorise la poursuite de ladite phase de recharge et on réalise au moins une première action dans ledit système (S), tandis que si ledit courant de recharge mesuré est supérieur audit courant de recharge maximal choisi augmenté de ladite première valeur choisie on interrompt ladite phase de recharge et on réalise au moins une deuxième action dans ledit système (S).

2. Procédé selon la revendication 1, **caractérisé en ce que** dans ladite étape (10-60) on réalise chaque première action lorsque ledit courant de recharge mesuré est compris entre ledit courant de recharge maximal choisi et ledit courant de recharge maximal choisi augmenté de ladite première valeur choisie pendant une durée supérieure à une première durée choisie.

3. Procédé selon la revendication 1 ou 2, **caractérisé en ce que** dans ladite étape (10-60) chaque première action est choisie parmi une génération d'une alerte d'un usager dudit système (S) requérant un contrôle par un service après-vente et un enregistrement d'au moins un premier code défaut représentatif d'un premier problème de sur-courant de recharge pendant ladite phase de recharge.

4. Procédé selon l'une des revendications 1 à 3, **caractérisé en ce que** dans ladite étape (10-60) ledit courant de recharge maximal est choisi en fonction d'une température en cours dans ladite batterie rechargeable (BP) et/ou d'un état de charge en cours de ladite batterie rechargeable (BP).

5. Procédé selon l'une des revendications 1 à 4, **caractérisé en ce que** dans ladite étape (10-60) ladite première valeur choisie est comprise entre 3% et 7% dudit courant de recharge maximal choisi.

6. Procédé selon l'une des revendications 1 à 5, **caractérisé en ce que** dans ladite étape (10-60) on détermine aussi pendant ladite phase de recharge si ledit courant de recharge mesuré est supérieur audit courant de recharge maximal choisi augmenté d'une seconde valeur choisie strictement supérieure à ladite première valeur choisie, et si ledit courant de recharge mesuré est compris entre ledit courant de recharge maximal choisi augmenté de ladite première valeur choisie et ledit courant de recharge maximal choisi augmenté de ladite seconde valeur choisie pendant une durée supérieure à une deuxième durée choisie on interrompt ladite phase de recharge et on réalise chaque deuxième action, tandis que si ledit courant de recharge mesuré est supérieur audit courant de recharge maximal choisi augmenté de ladite seconde valeur choisie pendant une durée supérieure à une troisième durée choisie on interrompt ladite phase de recharge et on réalise au moins une troisième action dans ledit système (S).

7. Procédé selon la revendication 6, **caractérisé en ce que** dans ladite étape (10-60) chaque deuxième action est choisie parmi une génération d'une alerte d'un usager dudit système (S) requérant un contrôle par un service après-vente et un enregistrement d'au moins un deuxième code défaut représentatif d'un deuxième problème de sur-courant de recharge pendant ladite phase de recharge, et chaque troisième action est choisie parmi une génération d'une alerte d'un usager dudit système (S) requérant un contrôle par un service après-vente et un enregistrement d'au moins un troisième code défaut représentatif d'un troisième problème de sur-courant de recharge pendant ladite phase de recharge.

8. Produit programme d'ordinateur comprenant un jeu d'instructions qui, lorsqu'il est exécuté par des moyens de traitement, est propre à mettre en œuvre le procédé de surveillance selon l'une des revendications 1 à 7, dans un système (S) comprenant une batterie rechargeable (BP) propre à recevoir un courant de recharge mesurable pendant une phase de recharge par une source d'alimentation (SA) externe, pour surveiller chaque phase de recharge.

9. Dispositif de surveillance (DS) pour un système (S) comprenant une batterie rechargeable (BP) propre à recevoir un courant de recharge mesurable pendant une phase de recharge par une source d'alimentation (SA) externe, **caractérisé en ce qu'**il comprend au moins un processeur (PR1) et au moins une mémoire (MD) agencés pour effectuer les opérations consistant à déterminer pendant ladite phase de recharge si ledit courant de recharge mesuré est compris entre un courant de recharge maximal choisi et ledit courant de recharge maximal choisi augmenté d'une première valeur choisie, et dans l'affirmative à autoriser la poursuite de ladite phase de recharge et à déclencher une réalisation d'au moins une première action dans ledit système (S), et, si ledit courant de recharge mesuré est supérieur audit courant de recharge maximal choisi augmenté de ladite première valeur choisie, à déclencher une interruption de ladite phase de recharge et une réalisation d'au moins une deuxième action dans ledit système (S).

10. Système (S) comprenant une batterie rechargeable (BP) propre à recevoir un courant de recharge mesurable pendant une phase de recharge par une source d'alimentation (SA) externe, **caractérisé en ce qu'**il comprend en outre un dispositif de surveillance (DS) selon la revendication 9.
